(19) Europäisches Patentamt
European Patent Office
Office européen des brevets

(11) Numéro de publication: 0 252 778 B1

(12) FASCICULE DE BREVET EUROPEEN

(45) Date de publication du fascicule du brevet: 12.09.90

(51) Int. Cl.[5]: **C08F 246/00**, C08F 216/14, C09D 129/02, C09J 129/02

(21) Numéro de dépôt: 87401251.1

(22) Date de dépôt: 04.06.87

(54) **Copolymeres à base d'un ou plusieurs monomères éthyléniques et d'au moins un mono, bis ou tris méthylol phényle-allyle éther et leur procédé de préparation.**

(30) Priorité: 26.06.86 FR 8609258

(43) Date de publication de la demande: 13.01.88 Bulletin 88/2

(45) Mention de la délivrance du brevet: 12.09.90 Bulletin 90/37

(84) Etats contractants désignés: AT BE CH DE ES GB GR IT LI LU NL SE

(56) Documents cités: US-A- 3 063 975

(73) Titulaire: NORSOLOR S.A., Tour Aurore Place des Reflets, F-92080 Paris la Défense Cédex 5(FR)

(72) Inventeur: Aubry, Jean, 87, rue Henri Dunant, F-62400 Bethune(FR)
Inventeur: Cassiani-Ingoni, Serge, 1, Place des Marchands Laboureurs, F-95120 Ermont(FR)
Inventeur: Hauschild, Rémi, 71, B1 Arago, F-75013 Paris(FR)

(74) Mandataire: Rieux, Michel, c/o NORSOLOR Service Propriété Industrielle B.P. 57, F-62670 Mazingarbe(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 252 778 B1

## Description

La présente invention a pour objet de nouveaux copolymères à base d'un ou plusieurs monomères éthyléniques et d'au moins un mono, bis ou tris méthylol phényle-allyle éther (I) de formule:

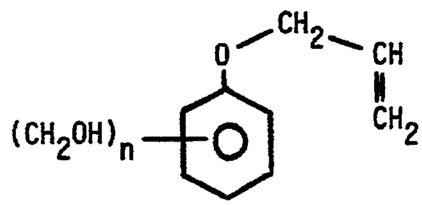

avec n compris entre 1 et 3.

La présente invention a également pour objet le procédé de préparation de ces copolymères ainsi que leur application pour la préparation de revêtements dans les domaines, notamment, des peintures, des vernis, des encres et des adhésifs.

Le composé (I) est actuellement bien connu dans le domaine des peintures et des vernis. Il est utilisé comme additif réticulant à des résines telles que des résines époxydes, phénoliques, vinyliques, polyesters ou aminoplastes auxquelles il donne une grande dureté. De plus, il améliore l'adhésion et la souplesse des revêtements réalisés à partir de ces résines.

Toutefois, l'utilisation du composé (I) présente de nombreux inconvénients.

Ainsi la préparation des revêtements qui le comprennent nécessite une opération finale d'étuvage qui doit être effectuée en présence d'un catalyseur acide tel que l'acide orthophosphorique à des températures supérieures à 165°C.

L'emploi du composé (I) dans les formulations pour bains d'électrophorèse est également connu. Par exemple, dans le brevet européen N° 82 214, le composé (I) est ajouté à un adduct époxy-amine. Le mélange ainsi obtenu, après neutralisation à l'acide acétique, est employé à la préparation d'un bain pigmenté d'électrophorèse. Un tel bain possède une mauvaise stabilité. En effet, sous l'influence de l'acide, en l'occurence l'acide acétique, le composé (I) se condense en partie sur lui-même en produisant un dégagement de formol. De ce fait, l'adduct se comporte comme un thermoplastique. Le composé (I) ne peut donc pas être utilisé en milieu acide et, en conséquence, ne peut également pas être utilisé en cataphorèse.

Un autre défaut du composé (I) réside dans son faible pouvoir mouillant des pigments, quand il est utilisé comme additif en mélange dans une formulation, par exemple de peinture. En conséquence, dans ces formulations, on ne peut pas obtenir la grande homogénéité indispensable pour atteindre les meilleures propriétés de brillant, d'adhérence et de résistance chimique.

La présente invention a pour objet des nouveaux copolymères, thermodurcissables ou thermoplastiques, à base de monomères éthyléniques et de composé (I), possédant d'excellentes propriétés de stabilité, même en milieu acide, et permettant de préparer des revêtements présentant d'excellentes qualités d'adhésion quelque soit le matériau sur lequel ils sont appliqués, ainsi qu'une excellente résistance aux substances chimiques les plus diverses, et en particulier les solvants, les graisses et les produits corrosifs.

Plus précisément, l'invention a pour objet des copolymères, thermodurcissables ou thermoplastiques, solubles dans les solvants organiques et/ou les milieux aqueux, caractérisés en ce qu'il sont obtenus par polymérisation radicalaire :

- d'au moins un mono, bis ou tris méthylol phényle-allyle éther (I) de formule :

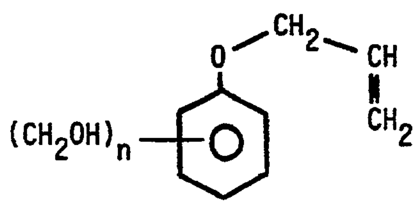

avec n compris entre 1 et 3,

- et d'au moins un monomère éthylénique, l'un au moins de ces monomères éthyléniques étant un monomère (méth)acrylique.

De préférence, les copolymères selon l'invention sont préparés à partir de :

- 0,5 à 20% en poids d'au moins un mono, bis ou tris méthylol phényle allyle éther (I),
- et de 80 à 95,5% en poids d'au moins un monomère éthylénique.

Pour des applications telles que les peintures et les vernis, on prépare des copolyméres selon l'invention de poids moléculaire moyen en poids compris entre 1500 et 10000.

Parmi les monomères éthyléniques convenant à la préparation du copolymère selon l'invention, on

peut citer les monomères méthacryliques et acryliques tels que l'acide (méth)acrylique, les esters (méth)acryliques, par exemple le (méth)acrylate de méthyle, le (méth)acrylate d'éthyle, le(méth)acrylate de butyle, le (méth)acrylate de 2-éthyle hexyle, les monomères (méth)acryliques hydroxylés tels que le (méth)acrylate de 2-hydroxyéthyle, le (méth)acrylate de 2-hydroxypropyle; les monomères (méth)acryliques comprenant des groupes amino tels que le (méth)acrylate de N, N-diméthylaminoéthyle, le (méth)acrylate de N, N-diéthylaminoéthyle ; les monomères vinyliques tels que l'acétate de vinyle, le styrène, l'α-méthylstyrène.

Contrairement aux mélanges comportant le composé (I) à l'état "libre" non modifié les copolymères selon l'invention possèdent un bon pouvoir mouillant et dispersant des pigments, permettant de ce fait d'augmenter la pigmentation pour une viscosité tout à fait convenable.

Les revêtements à base de copolymère selon l'invention possèdent un brillant élevé et des propriétés mécaniques élevées. Ils sont également très adhérents et ont une excellente résistance aux substances chimiques. Par ailleurs, les copolymères selon l'invention sont stables dans les milieux acides et de ce fait peuvent être utilisés en cataphorèse.

La présente invention a également pour objet un procédé de préparation des copolymères selon l'invention caractérisé en ce que:

a - On introduit le composé (I) à savoir le mono, bis ou tris méthylol phényle-allyle éther(I) de formule:

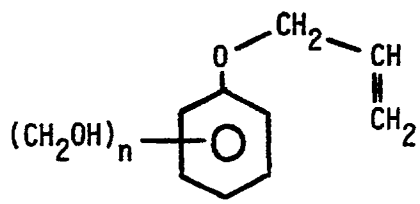

avec n compris entre 1 et 3, dans un solvant organique, à une température de 20 à 50°C, de préférence sous agitation.

b - puis, on chasse l'air, et en particulier l'oxygène, contenu dans le milieu réactionnel : cette opération peut, par exemple, être effectuée à l'aide d'un barbotage de gaz inerte dans le milieu réactionnel, par exemple à l'aide d'azote. Avantageusement, l'élimination d'air est effectué par l'ajout dans le milieu réactionnel d'un composé susceptible de générer in situ un gaz inerte permettant d'éliminer l'air contenu dans le milieu réactionnel. Ainsi, on peut utiliser un catalyseur diazoïque de polymérisation, de préférence à raison de 0,2 à 0,5 % en poids, cette valeur étant rapportée à la quantité totale de monomères utilisée dans la réaction, le composé (I) y compris. En effet, en se décomposant, le composé diazoïque produit in situ un dégagement d'azote qui entraine l'oxygène présent dans le milieu réactionnel,

c - On ajoute, dans le mélange réactionnel, une partie des monomères éthyléniques catalysés, de préférence de 10 à 30 % en poids de la quantité totale des monomères éthyléniques,

d - La température du mélange réactionnel est ensuite élevée à 80 - 140°C, et l'agitation est maintenue,

e - Ensuite, on introduit en continu la quantité restante de monomères éthyléniques, la température étant alors la température de reflux , si le solvant organique utilisé possède un point d'ébullition inférieur à 120°C, ou sinon une température comprise entre 120 et 160°C et de préférence entre 120 et 145°C dans le cas où le solvant organique a un point d'ébullition élevé et supérieur à ces valeurs, et la réaction est poursuivie jusqu'à la complète polymérisation.

Parmi les solvants utilisables dans le procédé selon l'invention, on peut citer les glycols tels que l'éthylène-glycol, le propylène-glycol; les esters tels que l'acétate d'éthylglycol; les éthers tels que le butylglycol; les alcools supérieurs tels que le n-butanol, l'alcool benzylique ou encore les solvants aromatiques tels que le xylène, le toluène. On peut également utiliser comme solvant des composés organiques qui ont une température d'ébullition élevée ou des composés organiques solides à température ambiante. Ces composés doivent également être inertes vis-à-vis du milieu réactionnel et posséder une faible viscosité à la température de réaction. Il peut être en effet particulièrement intéressant d'utiliser comme solvant un composé peu volatil à température ambiante possédant des propriétés particulières dont il fera bénéficier le copolymère selon l'invention. Dans cette dernière catégorie de solvant on peut citer des plastifiants tels que les phtalates, les adipates, les citrates; les dérivés oxyéthylénés par exemple le nonylphénol contenant en moyenne 10 molécules d'oxyde d'éthylène (nom abrégé NP 10), le nonylphénol contenant en moyenne 30 molécules d'oxyde d'éthylène (nom abrégé NP 30) ou le nonylphénol contenant en moyenne 100 molécules d'oxyde d'éthylène (nom abrégé NP 100); des trialkylphosphates tels que le triméthylphosphate, le triéthylphosphate, le tributoxyéthylphosphate, qui donnent à la résine formulée une excellente résistance à la chaleur. On peut bien entendu également utiliser une combinaison de deux ou plusieurs des solvants cités ci-dessus. Le critère de choix de ces solvants est la solubilité complète du composé (I) dans le solvant ou le mélange de solvant choisi.

Parmi les catalyseurs de polymérisation utilisables dans le procédé selon l'invention, on peut citer les

peroxydes tels que le peroxyde de benzoyle, le peroxyde de ditertiobutyle, le peroxyde de lauroyle; les perbenzoates tels que le perbenzoate de tertiobutyle; les hydroperoxydes tels que l'hydroperoxyde de cumène; les composés diazoïques tels que le 2,2'-azobis (isobutyronitrile), le 2,2'-azobis (2-méthylbutyronitrile). De préférence, on utilise de 1 à 4 % en poids de catalyseur de polymérisation par rapport à la quantité totale de monomères éthyléniques utilisés.

De préférence, lors des étapes (d) et (e) on maintient un palier de température, à la température choisie, respectivement de l'ordre de 30 minutes et de 3 à 4 heures, ce dernier, à compter de la fin de l'introduction des monomères éthyléniques.

La présente invention trouve son application dans le domaine des peintures, des vernis, des encres et des adhésifs.

Dans les exemples qui suivent, les quantités sont données en parties en poids, les pourcentages sont des % en poids.

Le mono, bis ou tris méthylol phényl-allyle éther (I) utilisé dans les exemples 1 à 7 est le composé vendu sous la dénomination commerciale 75108 Methylon par Allied Chemical.

Les caractéristiques de ce composé sont les suivantes :
- extrait sec (en %) : 84-89
- solvant : aucun
- viscosité à 25°C (en poises): 20-40
- poids spécifique : 1,163

## EXEMPLE 1

Dans un réacteur de polymérisation muni d'un système d'agitation mécanique, on charge :
- Ethylglycol : 1 200
- 75108 Méthylon : 168

puis, on réalise un barbotage d'azote dans ce mélange.

D'autre part, on prépare un mélange de monomères catalysés composés de :
- méthacrylate de méthyle : 440
- méthacrylate de 2-hydroxypropyle : 470
- acrylate de butyle : 1390
- acide méthacrylique : 268
- peroxyde de ditertiobutyle : 60

On ajoute dans le réacteur de polymérisation 20 % du mélange de monomères catalysés et on effectue le mélange du milieu réactionnel ainsi obtenu..

La température du milieu est élevée progressivement à 125°C (à 65°C, l'insufflation d'azote est arrêtée).

Ensuite, on introduit en continu le reste du mélange de monomères catalysés et la réaction est poursuivie jusqu'à la polymérisation complète : cette étape est effectuée en 4 h 30.

On refroidit ensuite le milieu réactionnel à 95°C et on ajoute une solution composée de :
- diméthylaminoethanol : 270
- eau désionisée : 1330

On obtient finalement une solution aqueuse à 50 % d'extrait sec. Cette solution peut être utilisée pour la formulation de vernis ou de laques durcissables à chaud. D'autre part, le copolymère en solution aqueuse préparé dans cet exemple présente d'excellentes propriétés de mouillage et de dispersion vis à vis des pigments.

### Exemple d'application

On prépare une laque blanche selon la formulation suivante :
- solution aqueuse à 50 % d'extrait sec : préparée ci-dessus 100
- résine mélamine formaldehyde de type méthoxy-méthyle mélamine de dénomination commerciale DYNOMIN MM-100 de DYNO INDUSTRIES : 15
- oxyde de titane rutile : 50
- butyle glycol : 20
- eau désionisée : 39

Après homogénéisation cette laque est appliquée sur une tôle (épaisseur : 25 microns) et on procède ensuite à l'étuvage : 20 minutes à 120° C. On obtient un film brillant et lisse présentant un excellent aspect.

Les caractéristiques de ce film sont :
- dureté (Persoz) : 280 secondes
- souplesse (Eriksen) : 8
- test de choc (1 kg) : 50 cm
- test de quadrillage : bon

**EXEMPLE 2**

Dans les mêmes conditions opératoires de l'exemple 1, on prépare un copolymère en solution à partir de :
- acétate d'éthyle glycol : 300
- 75108 méthylon : 35

et d'un mélange de monomères catalysés composé de :
- styrène : 115
- méthacrylate de 2-hydroxy-éthyle : 118
- acrylate de butyle : 348
- acid méthacrylique : 70
- peroxyde de dicumyle : 14

La solution finale obtenue possède 70 % d'extrait sec et constitue un excellent liant pour la formulation de revêtements durcissables à chaud tel que les laques à haut extrait sec.

**Exemple d'application**

On prépare une formulation à partir de :
- solution à 70 % d'extrait sec préparée dans l'exemple 2: 100
- résine méthoxy-méthyle mélamine de dénomination commerciale DYNOMIN MM-100 : 25
- oxyde de titane rutile : 72
- acétate d'éthyle glycol : 5

La formule ainsi obtenue présente un extrait sec de 80 %. Elle est applicable à l'aide d'un pistolet à disque à grande vitesse et donne des revêtements possédant d'excellentes qualités.

**EXEMPLE 3**

Conformément aux conditions opératoires indiquées dans l'exemple 1, on prépare un copolymère en solution à partir de :
- acétate d'éthyle glycol : 671
- 75108 méthylon 140

et d'un mélange de monomères catalysés composé de :
- styrène : 848
- méthacrylate de 2-hydroxy éthyle : 294
- méthacrylate de diméthylaminoéthyle: 478,6
- péroxyde de dicumyle : 49,2

Après polymérisation, la solution finale obtenue est diluée à l'aide de :
- acétate d'éthyle glycol : 300
- méthyle glycol : 389

la solution obtenue présente les caractéristiques suivantes :
- extrait sec : 60 %
- indice d'amine : 83
- indice d'hydroxyle : 62

A 1000 parties de la solution décrite ci-dessus, on ajoute 200 parties d'une solution d'acide lactique à 50 % dans l'eau désionisée.

La solution obtenue constitue un liant utilisable à la formulation de revêtements de type cataphorèse.

**Exemple d'application** : Préparation d'un revêtement par cathaphorèse

On prépare un vernis incolore à 15 % d'extrait sec en diluant la solution à 60 % d'extrait sec préparée ci-dessus avec de l'eau désionisée.

Les conditions opératoires de dépôt sont les suivantes :
- tensions appliquées aux bornes du bain : de 50 à 400 volts
- température du bain : 25°C
- temps de séjour des plaques sur lesquelles sont effectuées les dépôts : 2 minutes
- plaques utilisées :
  . tôles dégraissées
  . tôles en phosphatation-fer
  . tôles en phosphatation-zinc

Après lavage à l'eau des plaques ainsi traitées, on réalise un étuvage à 180°C en 10 minutes. Les résultats sont les suivants :
- épaisseurs des films de vernis déposés (en microns) :
  . tôles dégraissées : 10 - 15
  . tôles en phosphatation-fer : 12 - 16
  . tôles en phosphatation-zinc : 15 - 20

- la pénétration dans les corps creux est de 80-90 %
- on constate d'autre part que le lavage à l'eau est facile.

**EXEMPLE 4**

En utilisant les conditions opératoires de l'exemple 1, on prépare un copolymère en solution à partir de :
- éthyle glycol : 600
- 75108 Méthylon : 132

et à partir d'un mélange de monomères catalysés composé de:
- méthacrylate de méthyle : 640
- acrylate de butyle : 293
- acide méthacrylique : 102
- peroxyde de ditertiobutyle : 34

En fin de réaction de polymérisation et après refroidissement à 95°C on neutralise et on dilue la solution obtenue à l'aide de :
- eau désionisée : 570
- éthanol : 565
- diméthylaminoéthanol : 70

On obtient finalement une solution à 40 % d'extrait sec d'un copolymère thermoplastique, à base de monomères (méth)acryliques et d'éther allylique de phényle méthylol, et présentant d'excellentes propriétés pour la formulation de vernis et de revêtements pigmentés. De plus, cette solution présente d'excellentes propriétés de mouillage et de dispersion vis à vis des pigments.

**EXEMPLE 5**

En utilisant les conditions opératoires de l'exemple 1, on prépare un copolymère en solution à partir de :
- éthyle glycol : 200
- 75108 Méthylon 26

et à partir d'un mélange de monomères catalysés composé de :
- styrène : 156
- acrylate d'éthyle : 317
- acide méthacrylique : 66
- peroxyde de ditertiobutyle : 15.

En fin de réaction, la solution obtenue est refroidie à 80°C et diluée à l'aide de 220 parties en poids d'éthanol. On obtient alors une solution à 60 % d'extrait sec. Cette solution possède un indice d'acide de 70.

Le copolymère ainsi fabriqué présente d'excellentes propriétés de mouillage et de dispersion vis à vis des pigments.

**Exemple d'application** : formulation d'une encre de type Helio

Cette formulation est préparée à partir de :
- solution à 60 % d'extrait sec indiquée ci-dessus : 47,9
- bleu de phtalocyanine : 9,2
- cire micronisée : 1,8
- produit anti-mousse : 0,6
- éthanol : 40,5

On obtient une formule à 40,3 % d'extrait sec qui est applicable sur papier et polychlorure de vinyle notamment, par la méthode Hélio.

Le revêtement obtenu possède une excellente imprimabilité et résiste parfaitement à l'eau (résistance à l'eau supérieure à 500 tours au test DOITTEAU).

**EXEMPLE 6**

En utilisant les conditions opératoires de l'exemple 1, on prépare un copolymère en solution à partir de :
- éthyle glycol : 350
- 75108 Méthylon : 102

et à partir d'un mélange de monomères catalysés composé de :
- styrène : 200
- acrylate d'éthyle : 514
- acide méthacrylique : 86
- peroxyde de dicumyle : 32

En fin de réaction, la solution obtenue est refroidie à 95°C et diluée et neutralisée à l'aide de :
- eau désionisée : 526

- diméthylaminoéthanol : 50
- isopropanol : 474

On obtient une solution limpide comprenant 40 % d'extrait sec, et dont l'indice d'acide est de 60.

Après application sur papier, on obtient un film sec, brillant et lisse. Ce film n'est pas collant à 40°C (il ne présente pas de phénomène dit de blocking). Le copolymère ainsi fabriqué présente également d'excellentes propriétés de mouillage et de dispersion vis à vis des pigments et une excellente résistance à l'eau (résistance à l'eau supérieure à 500 tours dans le test DOITTEAU)

## EXEMPLE 7

Dans un réacteur de polymérisation muni d'un système d'agitation mécanique, on charge :
- condensat d'oxyde d'éthylène sur nonylphénol (contenant en moyenne 30 molécules d'oxyde d'éthylène et dont le nom abrégé est NP 30) : 600
- 75108 méthylon : 132

Ensuite on élève la température à 130°C en insufflant dans le milieu réactionnel de l'azote. Dès que la température atteint 125°C on ajoute en continu un mélange de monomères catalysés composé de :
- méthacrylate de méthyle : 640
- acrylate de butyle : 293
- acide méthacrylique : 102
- peroxyde de ditertiobutyle : 34

La réaction de polymérisation est effectuée à 130-135°C et dure environ 4 heures.

La solution obtenue est refroidie à 95°C, puis neutralisée et diluée à l'aide de :
- eau désionisée : 3 166
- ammoniaque : 50
- diméthylaminoéthanol : 10

On obtient finalement une solution à 40 % d'extrait sec présentant des propriétés remarquables pour le traitement du bois. Cette solution possède en effet d'excellentes qualités de mouillage et de pénétration.

De plus cette solution mouille et disperse très bien les oxydes de fer; de ce fait, elle peut être utilisée à l'état de pâtes concentrées pour la préparation de lazures pour bois.

## Revendications

1. Copolymères thermodurcissables ou thermoplastiques, solubles dans les solvants organiques et/ou les milieux aqueux, caractérisés en ce qu'il sont obtenus par polymérisation radicalaire :
- d'au moins un mono, bis ou tris méthylol phényle-allyle éther(I) de formule :

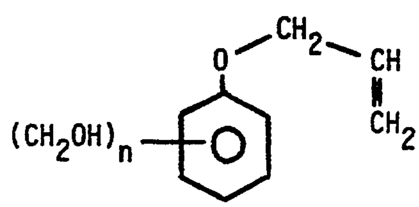

avec n compris entre 1 et 3,
- et d'au moins un monomère éthylénique, l'un au moins de ces monomères éthyléniques étant un monomère (méth)acrylique.

2. Copolymères selon la revendication 1, caractérisés en ce qu'il sont obtenus à partir de :
- 0,5 à 20 % en poids d'au moins un mono, bis ou tris méthylol phényle-allyle éther(I)
- et de 80 à 95,5 % en poids d'au moins un monomère éthylénique.

3. Procédé de préparation du copolymère selon la revendication 1, caractérisé en ce que :

a) - on introduit le mono, bis ou tris méthylol phényle-allyle 'éther(I) de formule :

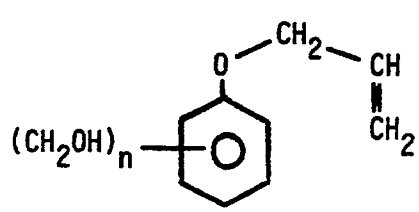

avec n compris entre 1 et 3
dans un solvant organique, à une température de 20 à 50°C, sous agitation,

b) - puis, on chasse l'air contenu dans le milieu réactionnel,
c) on ajoute dans le mélange réactionnel une partie des monomères éthyléniques catalysés,
d) - la température du mélange réactionnel est ensuite élevée à 80 - 140°C et l'agitation est maintenue,
e) - ensuite, on introduit en continu la quantité restante de monomères éthyléniques, la température étant alors la température de reflux si le solvant organique utilisé possède un point d'ébullition inférieur à 120°C, ou sinon, une température comprise entre 120 et 160°C, et la réaction est poursuivie jusqu'à la complète polymérisation.

4. Procédé selon la revendication 3, caractérisé en ce que le l'élimination d'air dans l'étape (b) est effectué à l'aide d'un barbotage de gaz inerte dans le milieu réactionnel.

5. Procédé selon la revendication 3, caractérisé en ce que l'élimination d'air dans l'étape (b) est effectué à l'aide d'un ajout d'un composé susceptible de générer in situ un gaz inerte.

6. Procédé selon la revendication 5, caractérisé en ce que le composé susceptible de générer in situ un gaz inerte est un catalyseur diazoïque de polymérisation.

7. Procédé selon la revendication 6, caractérisé en ce que le catalyseur diazoïque de polymérisation est utilisé à raison de 0,2 à 0,5 % en poids par rapport à la quantité totale de monomères utilisés dans la réaction, le mono, bis ou tris méthylol phényle-allyle éther y compris.

8. Procédé selon l'une quelconque des revendications 3 à 7, caractérisé en ce que l'on ajoute dans l'étape (c) 10 à 30 % en poids de la quantité totale de momères éthyléniques.

9. Procédé selon l'une quelconque des revendications 3 à 8, caractérisé en ce que les monomères éthyléniques sont catalysés à raison de 1 à 4 % en poids de catalyseur de polymérisation.

10. Application du copolymère selon la revendication 1 ou 2 pour la préparation de revêtements dans le domaine des peintures, des vernis, des encres et des adhésifs.

**Patentansprüche**

1. Warmaushärtende oder thermoplastische Copolymere, die in organischen Lösungsmitteln und/oder in wäßrigen Milieus löslich sind, dadurch gekennzeichnet, daß sie erhalten werden durch Radikal-Polymerisation von:
– mindestens einem Mono-, Bis- oder Tris-methylol phenyl-allylether (I) der Formel:

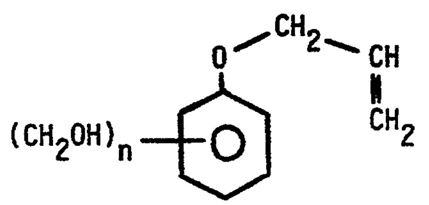

worin n zwischen 1 und 3 beträgt, und
– mindestens einem Ethylenmonomer, wobei mindestens eines dieser Ethylenmonomere ein (Meth)acrylmonomer ist.

2. Copolymere nach Anspruch 1, dadurch gekennzeichnet, daß sie erhalten werden aus:
– 0,5 bis 20 Gew.-% mindestens eines Mono-, Bis- oder Trismethylol phenyl-allyl-ethers (I) und
– 80 bis 95, 5 Gew.-% mindestens eines Ethylenmonomers.

3. Verfahren zur Herstellung des Copolymers nach Anspruch 1, dadurch gekennzeichnet, daß man:
a) – den Mono-, Bis- oder Tris-methylol phenyl-allyl-ether (I) der Formel

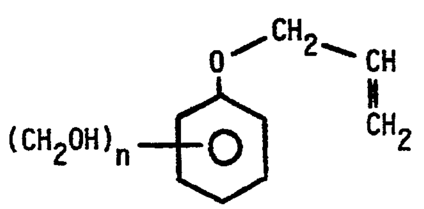

worin n zwischen 1 und 3 beträgt, bei einer Temperatur von 20° bis 50°C unter Rühren in ein organisches Lösungsmittel einbringt,
b) – sodann die in dem Reaktionsmilieu enthaltene Luft austreibt,
c) – dem Reaktionsgemisch einen Teil der katalysierten Ethylenmonomere zusetzt,
d) – die Temperatur des Reaktionsgemisches sodann auf 80° bis 140°C anhebt und das Rühren aufrechterhält, und
e) – anschließend kontinuierlich die restliche Menge an Ethylenmonomeren einbringt, wobei die Temperatur nun die Temperatur des Rückflusses ist, wenn das eingesetzte organische Lösungsmittel einen

Siedepunkt unter 120°C besitzt, oder, wenn nicht, eine Temperatur zwischen 120° und 160°C ist, und die Reaktion bis zur vollständigen Polymerisation fortgeführt wird.

4. Verfahren nach Anspruch 3, dadurch gekennzeichnet, daß die Eliminierung der Luft im Schritt (b) durch Einblasen eines Inertgases in das Reaktionsmilieu erfolgt.

5. Verfahren nach Anspruch 3, dadurch gekennzeichnet, daß die Eliminierung der Luft im Schritt (b) durch Zugabe einer zur Erzeugung eines Inertgases in situ fähigen Verbindung erfolgt.

6. Verfahren nach Anspruch 5, dadurch gekennzeichnet, daß die zur Erzeugung eines Inertgases in situ fähige Verbindung ein Diazo-Polymerisationskatalysator ist.

7. Verfahren nach Anspruch 6, dadurch gekennzeichnet, daß der Diazo-Polymerisationskatalysator in einer Menge von 0,2 bis 0,5 Gew.-%, bezogen auf die Gesamtmenge der in der Reaktion verwendeten Monomere einschließlich des Mono-, Bis- oder Trismethylol phenyl-allyl-ethers, eingesetzt wird.

8. Verfahren nach irgendeinem der Ansprüche 3 bis 7, dadurch gekennzeichnet, daß man im Schritt (c) 10 bis 30 Gew.-% der Gesamtmenge der Ethylenmonomere zusetzt.

9. Verfahren nach irgendeinem der Ansprüche 3 bis 8, dadurch gekennzeichnet, daß die Ethylenmonomere in einer Menge von 1 bis 4 Gew.-% an Polymerisationskatalysator katalysiert sind.

10. Verwendung des Copolymers nach Anspruch 1 oder 2 zur Herstellung von Überzügen auf dem Gebiet der Farben, Lacke, Druckfarben und Kleber.

**Claims**

1. Thermosetting or thermoplastic copolymers, soluble in organic solvents and/or aqueous media, characterized in that they are produced by radical polymerization:

– of at least one mono-, bis- or trismethylolphenyl allyl ether (I) of formula:

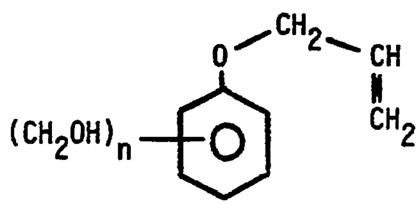

n being from 1 to 3, and

– of at least one ethylenic monomer, at least one of these ethylenic monomers being a (meth)acrylic monomer.

2. Copolymers according to Claim 1, characterized in that they are produced from:

– 0.5 to 20% by weight of at least one mono-, bis- or trismethylolphenyl allyl ether (I) and

– from 80 to 95.5% by weight of at least one ethylenic monomer.

3. Process for the preparation of the copolymer according to Claim 1, characterized in that:

a) the mono-, bis- or trismethylolphenyl allyl ether (I) of formula:

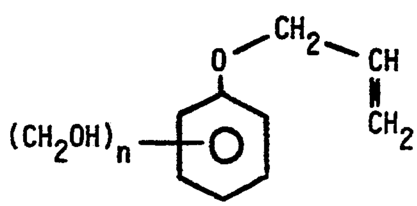

n being from 1 to 3, is introduced into an organic solvent at a temperature of 20 to 50°C, with stirring,

b) the air present in the reaction medium is then expelled,

c) a part of the catalysed ethylenic monomers is added to the reaction mixture,

d) the temperature of the reaction mixture is then raised to 80–140°C and stirring is continued,

e) the remaining quantity of ethylenic monomers is then introduced continuously, the temperature then being the reflux temperature if the organic solvent employed has a boiling point below 120°C, or else a temperature of between 120 and 160°C and the reaction is continued to complete polymerization.

4. Process according to Claim 3, characterized in that the removal of air in step (b) is performed by bubbling inert gas into the reaction medium.

5. Process according to Claim 3, characterized in that the removal of air in step (b) is performed by adding a compound capable of generating an inert gas in situ.

6. Process according to Claim 5, characterized in that the compound capable of generating an inert gas in situ is a diazo polymerization catalyst.

7. Process according to Claim 6, characterized in that the diazo polymerization catalyst is employed in a proportion of 0.2 to 0.5% by weight based on the total quantity of the monomers employed in the reaction, including the mono-, bis- or trismethylolphenyl allyl ether.

8. Process according to any one of Claims 3 to 7, characterized in that 10 to 30% by weight of the total quantity of ethylenic monomers is added in step (c).

9. Process according to any one of Claims 3 to 8, characterized in that the ethylenic monomers are catalysed in a proportion of 1 to 4% by weight of polymerization catalyst.

10. Application of the copolymer according to Claim 1 or 2 in the preparation of coatings in the field of paints, varnishes, inks and adhesives.